## Europäisches Patentamt

(19) **European Patent Office**

**Office européen des brevets**

(11) Veröffentlichungsnummer: **0 166 137**
**B1**

(12) # EUROPÄISCHE PATENTSCHRIFT

(45) Veröffentlichungstag der Patentschrift: **30.01.91**

(51) Int. Cl.⁵: **A 01 C 7/00,** G 05 D 7/06

(21) Anmeldenummer: **85105662.2**

(22) Anmeldetag: **08.05.85**

(54) **Verfahren und Vorrichtung zum Zählen von Partikeln.**

(30) Priorität: **28.05.84 DE 3419884**

(43) Veröffentlichungstag der Anmeldung:
**02.01.86 Patentblatt 86/01**

(45) Bekanntmachung des Hinweises auf die
Patenterteilung:
**30.01.91 Patentblatt 91/05**

(84) Benannte Vertragsstaaten:
**AT BE CH DE FR GB IT LI LU NL SE**

(56) Entgegenhaltungen:
**WO-A-83/02872**
**FR-A-2 412 840**
**FR-A-2 478 348**
**US-A-3 788 466**
**US-A-4 004 289**
**US-A-4 079 362**
**US-A-4 212 398**

(73) Patentinhaber: **Amazonen-Werke H. Dreyer**
**GmbH & Co. KG**
**Postfach 51**
**D-4507 Hasbergen-Gaste (DE)**

(72) Erfinder: **Harrsen, Jan, Dipl.-Ing.**
**Breslauerstrasse 3**
**D-2086 Ellerau (DE)**
Erfinder: **Grosse-Scharmann, Franz, Dr. Dipl.-
Ing.**
**Waldstrasse 35**
**D-2872 Hude i.O. (DE)**
Erfinder: **Gattermann, Bernd, Dipl.-Ing.**
**Eichenweg 35**
**D-2872 Hude i.O. (DE)**

(74) Vertreter: **Patentanwälte Grünecker, Kinkeldey,**
**Stockmair & Partner**
**Maximilianstrasse 58**
**D-8000 München 22 (DE)**

EP 0 166 137 B1

Courier Press, Leamington Spa, England.

**Beschreibung**

Die Erfindung bezieht sich auf ein Verfahren und eine Vorrichtung zum Zählen von Saatgutkörnern, Düngemitteln und anderen in der Landwirtschaft verwendeten Partikeln, nach dem Oberbegriff des Anspruch 1 bzw. des Anspruchs 7.

Eine solche Vorrichtung, die auch nach einem gattungsgemäßen Verfahren arebeitet, ist in der DE—OS 29 01 767 beschrieben. Dort treffen die Partikel auf ein Mikrophon auf, welches ein Aufprallgeräusch wahrnimmt, wenn eine Anzahl von Partikeln gegen die Membran des Mikrophons prallt. Entsprechend diesem Aufprallgeräusch werden elektrische Signale einem Verstärker zugeführt, der dann ein Ausgangssignal erzeugt, wenn ein ausreichend starkes Aufprallgeräusch vorliegt. Diese bekannte Vorrichtung macht es möglich, größere Mengen von Partikeln pauschal nachzuweisen. Sie kann daher insbesondere dann Verwendung finden, wenn es auf die genaue Anzahl der einzelnen Partikel nicht so sehr ankommt, sondern nur darauf, daß überhaupt Partikel vorhanden sind. Zur Zählung einzelner Partikel, z.b. auszuwäenden Saatguts, ist diese Vorrichtung bzw. dieses Verfahren daher nicht geeignet.

Aus der US—PS 4 004 289 ist es bekannt, bei einem Drescher die Anzahl der enhaltenen Körner zu erfassen. Dabei soll die Spreu auch bei leichten Körnern, die ein ähnliches Gewicht wie die Spreu haben, nicht mitgezählt werden. Dazu wird ein Amplitudenvergleich durchgeführt, wobie die Amplituden der jeweiligen Signale in zwei unterschiedlichen Frequenzbändern untersucht werden. Diese Vorgehensweise basiert auf der angeblichen Erkenntnis, daß aus den Amplitudendifferenzen in den beiden unterschiedlichen Frequenzbändern Rückschlüsse darauf gezogen werden können, ob nun Spreu oder Körner auf den Sensor aufgetroffen sind.

Dieses Verfahren beruht in erster Linie darauf, daß man Amplituden in verschiedenen Frequenzenbändern vergleicht, um Teilchen unterschiedlicher Art auseinanderhalten zu können.

Der Erfindung liegt die Aufgabe zugrunde, ein Verfahren und eine Vorrichtung anzugeben, gemäß denen mit relativ großer Genauigkeit die genaue Anzahl der einzelnen Partikel, die die Meßstelle passieren, festgestellt werden kann.

Diese Aufgabe wird bei einen Vefahren mit den Merkunden des Oberbegriffs des Anspruch 1 durch desse kennzeichnende Merkmale gelöst.

Bei dem erfindungsgemäßen Verfahren wird somit im einfachsten Falle zunächst eine bestimmte, für den Aufprall eines Partikels charakteristische Elongation ermitelt, so daß feststeht, daß, wenn deise Elongation erreicht wird, ein Partikel vorliegt. In kurzen Zeitabständen werden dann weitere Elongationen erfaßt, die mit der charakteristischen Elongationen verglichen werden. Wird festgestellt, daß ein aktueller Elongations wert größer als der zu diesem Zeitpunkt (in gleicher zeitlicher Relation) für ein Partikel ansich erhaltene, charakteristische Elongations wert ist, so kann daraus auf das erneute Auftreffen eines weiteren Partikels geschlossen werden.

In vorteilhafter Ausgestaltung der Verfahrens werden eine Vielzahl von für den Aufprall eines Partikels charakteristischen Elongations werte, die für eine beim Aufprall eines Körpers entstehende Abklinkurve typisch sind, erfaßt und festgehalten und es wird eine Vielzahl von beim Aufprall tatsächlich erhaltenen Elongationen, die eine Eingangssignalkurve bilden, erfaßt, und mit der charakteristischen Abklingkurve verglichen. Beim Vergleich der charakteristischen Kurve mit der Eingangssignalkurve kann dann festgestellt werden, ob ein oder mehrere Werte der Eingangssignalkurve oberhalb z.B. der Abklingkurve, die auch als · Partikelsignalhüllkurve bezeichnet werden könnte, liegen. Wenn dies der Fall ist, läßt dies einen Rückschluß darauf zu, daß erneut ein Partikel auf die Prallfläche aufgetroffen ist. Vorteilhaft bei diesem Verfahren ist est, daß auch schwache Aufprallimpulse als Partikel erkannt werden können, sofern sie nur größer als die Abklingkurve des letzten erkannten Partikels sind.

In weiterer vorteilhafter Ausgestaltung des Verfahrens wird vorgesehen, daß aus dem Aufprallen einer Reihe von Partikeln eine durchschnittliche Schwingungsdauer der Prallplatte ermittelt wird und daß das erhaltene Zählergebnis in Abhängigkiet von dieser Schwingungsdauer korrigiert wird. Es hat sich herausgestellt, daß die Dauer der Schwingung, die ein Partikel auf der Prallplatte auslöst, für die Art des Partikels charakteristisch ist, so daß bei gleichem Partikeldurchsatz und unterschiedlichen Partikeln unterschiedliche Werte gemessen werden. Durch Eingabe eines entsprechenden von der Schwingungsdauer abhängigen Korrekturwertes, die ihrerseits wiederum für unterschiedliche Partikel ein Unterscheidungskriterium ermöglicht, wird eine Kompensation dieses Fehlers dann möglich.

Weiterhin kann vorgesehen werden, das statistische Maß der Streuung um die durchschnittliche Schwingungsdauer der Prallplatte zu ermitteln und die Korrktur abhängig von diesem Streumaß vorzunehmen. Es hat sich gezeigt, daß durch eine solche Korrektur das erhaltene Ergebnis noch genauer wird. Für Partikelarten, bei denen die Einzelpartikel z.B. in der Größe stark unterschiedlich sind — was zu variierenden Aufprallcharakteristiken führt — wird auch das statistische Maß der mittleren Abweichung von der durchschnittlichen Schwingungsdauer größer, so daß dann entsprechend korrigiert werden kann.

Eine weitere vorteilhafte Ausgestaltung des erfindungsgemäßen Verfahrens sieht vor, daß die prozentuale Übereinstimmung der erfaßten Eingangssignalform mit einer festgehaltenen, für ein spezielles Partikel typischen Signalform festgestellt werden kann. Durch diese Maßnahme ist es mögliche, verschiedene Signalformen, die verschiedenen Geräuschen entsprechen, zu unterscheiden, so daß echte Partikelsignale herausgefiltert werden können.

Eine weitere Ausgestaltung des erfindungsgemäßen Verfahrens sieht vor, daß das durch die auftretenden Partikel entstandene Signal auf typische Frequenzanteile hin untersucht wird und daß dann bestimmte Teilfrequenzen zur Unterscheidung der Partikelsignale herangezogen werden. Auch damit lassen sich echte, zu zählende Partikel von anderen, schwingungserzeugenden Störfaktorken unterscheiden.

Eine gattungsgemäße Vorrichtung zur Durchführung des erfindungsgemäßen Verfahrens weist eine Auswerteeinrichtung auf, wobie die Auswerteeinrichtung eine Erfassungsschaltung, in der die vom Schallwandler erhaltenen Signale mit dem Zeitpunkt des Auftretens versehen werden, einen Datenpuffer, in dem die mit dem Zeitpunkt versehenen Signale abgelegt werden und eine Auswerteschaltung aufweist, in der die gepufferten aktuellen Signalwerte mit gespeicherten Signalwerten verglichen werden. Eine Vorrichtung mit diesen Merkmalen erlaubt in einfacher Weise die Durchführung der einzelnen Verfahrensschritte, wobei insbesondere dann, wenn die Auswerteeinrichtung mit einem Mikroprozessor verwirklicht wird, eine kleine und kompakte Vorrichtung zur exakten Zählung von einzelnen Partikeln geschaffen wird.

In vorteilhafter Ausgestaltung der Vorrichtung ist vorgesehen, daß als Schallwandler ein piezoelektrisches Element vorgesehen ist. Dabei ist es dann weiter vorteilhaft, wenn zwei im Abstand zueinander angeordnete, parallele Prallplatten vorgesehen sind, an deren zugekehrten Seiten jeweils ein piezoelektrisches Element angeordnet ist, weil dadurch Störgeräusche, z.B. aus der Umwelt, gegengekoppelt werden können und somit der Störabstand zwischen Nutz- und Störsignal vergrößert werden kann.

Eine weitere vorteilhafte Ausgestaltung sieht vor, daß zwischen der Auswerteeinrichtung und dem piezolelektrischen Element ein Verstärker und ein Gleichrichter zwischengeschaltet sind, so daß von der Auswertschaltung jeweils nur die Amplituden der positiven (oder negativen) Halbwellen betrachtet werden.

Das an der Auswertschaltung erhaltene Signal wird einem Zähler zugeführt, der mit einer Korrektureinheit verbunden ist. In der Korrektureinheit können dann die erhaltenen Zählsignale noch unter Berücksichtigung verschiedener Parameter, wie z.B. der Signallänge, beeinflußt und aufbereitet werden.

Wenn das an der Korrektureinheit erhaltene Ausgangssignal mit Hilfe einer Zeitschaltung auf ein vorgegebenes Zeitintervall bezogen wird, kann direkt als Ausgang der Auswerteeinrichtung die Durchflußmenge pro Zeiteinheit erhalten werden.

Im folgenden wird die Erfindung anhand der beiliegenden Zeichnung weiter erläutert und beschrieben. Dabei zeigt

Fig. 1 eine schematische Darstellung einer erfindungsgemäßen Vorrichtung, und

Fig. 2 ein Diagramm zur unterstützenden Erläuterung des erfindungsgemäßen Verfahrens.

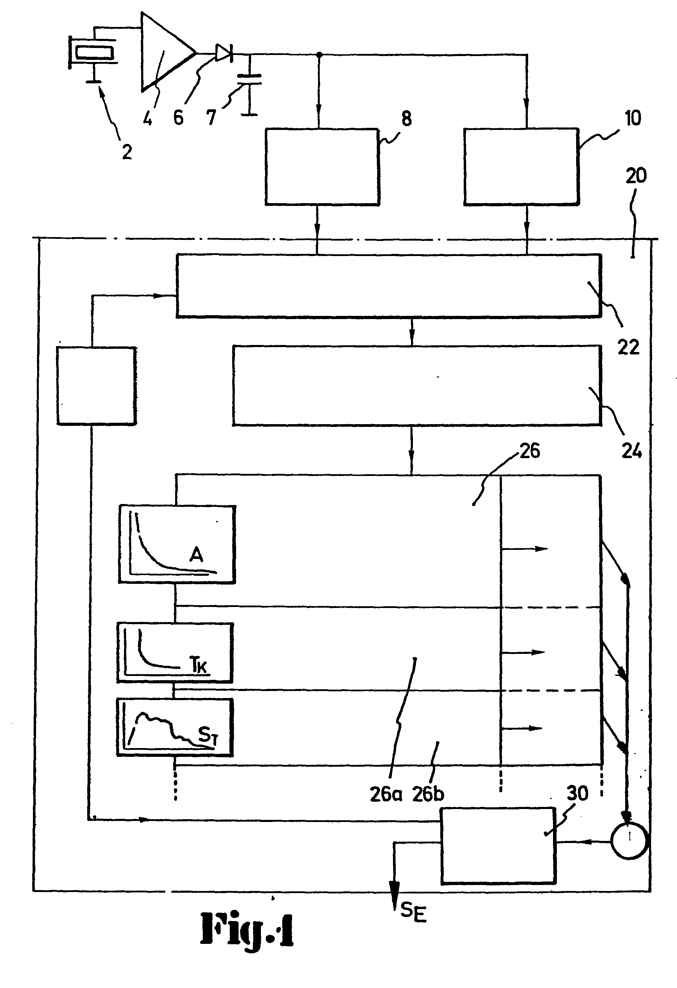

Die in Fig. 1 dargestellte erfindungsgemäße Vorrichtung besitzt einen piezoelektrischen Schallwandler 2, dessen Ausgangssignale, die beim Aufprall eines oder mehrerer Partikel entstehen, mit einem Verstärker 4 und einer Diode 6 verstärkt und gleichgerichtet werden. Die gleichgerichteten Signale werden einer Signalerkennungseinheit 8 und einem Analog-Digital-Wandler 10 zugeführt, deren Ausgänge jeweils zu einer Erfassungsschaltung der im ganzen mit 20 bezeichneten Auswerteeinrichtung führen. Die Auswerteeinrichtung 20, die in der Praxis durch einen Mikroprozessor verwirklicht werden kann, besitzt weiter einen Datenpuffer 24, eine Auswerteschaltung 26, eine Korrekturschaltung 26a sowie eine weitere Auswerteschaltung 26b. In der Auswerteschaltung 26 bzw. 26b werden verschiedene Signalanalysen durchgeführt, wobei noch weitere, hier nicht dargestellte zusätzliche Auswerteschaltungen bzw. Module anschließar sind.

Die in der Auswerteschaltung 26 und 26b sowie in der Korrekturschaltung 26a erhaltenen Werte werden zusammen zu einer Einheit 30 weitergeleitet, die mit einem Zeitglied 28 in Verbindung steht.

Diese Vorrichtung arbeitet zur Durchführung des erfindungsgemäßen Verfahrens wei folgt:

Die am piezoelektrischen Wandler 2 erhaltenen Signale werden bei 4, 6 und 7 verstärkt und gleichgerichtet und die hochfrequenten Anteile werden herausgefiltert. Das dann vorliegende Signal wird zur Signalerkennungseinheit 8 und zum Analog-Digital-Wandler 10 weitergeleitet.

Die Signalerkennungseinheit erkennt das Auftreten eines Signales gegenüber einem Untergrundpegel und bewirkt in der Erfassungsschaltung 22, daß ein entsprechender vom Analog-Digital-Wandler erhaltener digitaler wert, der dem Signalpegel entspricht, erfaßt wird. Dabei werden bei diesem Beispiel um nicht sämtliche Signaldaten verarbeiten zu müssen, jeweils nur die elongationen am Maximum, d.h. die Amplituden bzw. die Schwingungsmaxima der einzelnen Schwingungen digital erfaßt und mit Hilfe des Zeitgebers 28 mit dem Zeitpunkt des Auftretens korreliert und so im Datenpuffer 24 abgelegt.

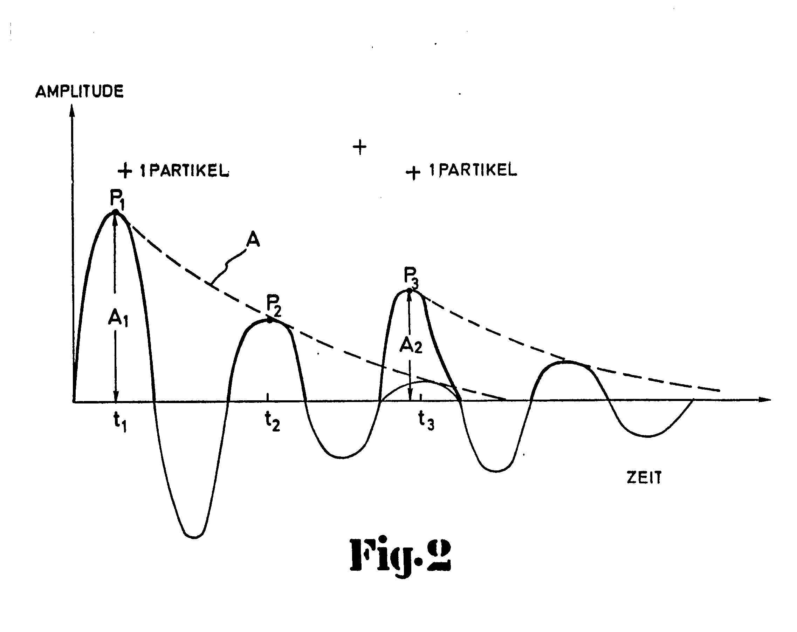

Im Datenpuffer sind somit jeweils die Schwingungsmaxima der zum jeweiligen Abtastzyklus erhaltenen Schwingungen abgespeichert. Zur Verdeutlichung sind in Fig. 2 drei so erhaltene Punkte dargestellt und mit $P_1$ bis $P_2$ bezeichnet. Es wird also eine über die Zeit $t_1$, $t_2$, $t_3$ ... erhaltene Eingangssignalkurve ermittelt und im Datenpuffer 24 zwischengespeichert.

In der Auswerteschaltung 26 ist eine für ein Partikel typische, zuvor ermittelte charakteristische Abklingkurve A abgespeichert. Diese Kurve ist auch in Fig. 2 gestrichelt dargestellt. Diese Abklingkurve wird nun mit der zwischengespeicherten Eingangssignalkurve verglichen. (Es ist natürlich ebenso möglich eine charakteristische Anstiegskurve abzuspeichern und das aktuelle Anstiegsverhalten mit dieser Kurve zu vergleichen).

Anhand von dem in Fig. 2 gezeigten Verhalten ist zu sehe, daß zwar die zum Zeitpunkt $t_1$ und $t_2$ erhaltenen Punkte $P_1$ und $P_2$ innerhalb der einhül-

lenden der charakteristischen, abgespeicherten Abklingskurve A liegen, der zum Zeitpunkt $T_3$ erhaltene Amplitudenwert $P_3$ aber größer als der entsprechende Wert ist, der zum Zeitpunkt $T_3$ erhalten würde, wenn nur ein Partikelaufprall stattgefunden hätte. Es taucht also innerhalb der in der für ein Partikel typischen Abklingzeit ein weiteres Schwingungsmaximum auf, welches somit erfaßt wird. Aus dem Auftreten solcher Maxima kann dann gefolgert werden, daß ein weiteres Partikel auf die Aufprallfläche geschlagen ist. Diese weiteren Partikel werden somit erfaßt und auch gezählt.

Das auf diese Art und Weise erhaltene Zählsignal kann dann weiter verfeinert und verbessert werden. So kann z.B. in einer weiteren Auswerteschaltung 26b eine individuelle, für einen bestimmten Körper charakteristische Signalform $S_t$ abgespeichert werden. Die Meßsignale können mit dieser typischen Signalform verglichen werden, wobei eine prozentuale Übereinstimmung ermittelt werden kann, die die Unterscheidung verschiedener Geräusche ermöglicht. So können echte Partikelsignale von Rausch- oder anderen Störsignalen unterschieden werden.

Wenn daher ein Signal zwar das typische Abklingverhalten, wie es durchg die Kurve A in der Auswerteschaltung 26 abgespeichert ist, zeigt, aber sich bei dem Signalvergleich herausstellt, daß die charakteristische Signalform nicht vorliegt, dann wird dieses Signal nicht mitgezählt, weil es sich dann un ein anderes, nicht mit den zu zählenden Partikeln übereinstimmendes Teilchen handelt.

Eine weitere Möglichkeit der zusätzlichen Analyse in einem nicht gezeigten zusätzlichen Auswertemodul liegt darin, die erhaltenen Signale auf typische Frequenzanteile hin zu untersuchen. Nach einer Bestimmung von Teilfrequenzgrößen, die auch für die aufprallenden Körper jeweils typisch sind, können solche typischen Frequenzanteile mit zur Unterscheidung von verschiedenen Partikeln herangezogen werden.

Da zwischen der Größe der Signale und dem absoluten Zählfehler ein fester Zusammenhang besteht, kann dies in einer Korrekturschaltung 26a entsprechend berücksichtigt werden. Dort wird eine Korrekturtabelle $T_k$ abgelegt, die im wesentlichen einen Korrekturfaktor als Funktion der Signale und der Signalamplitude darstellt. Die ermittelte Körnerzahl wird mit dem entsprechenden Korrekturfaktor korrigiert.

Die so korrigierten und ausgewählten Zählsignale werden dann von der Einheit 30, die mit dem Zeitglied 28 in Verbindung steht, in ein Körner-pro-Zeit-Ergebnissignal $S_e$ umgewandelt.

**Patentansprüche**

1. Verfahren zum Zählen von Saatgutkörnern, Düngemittel und anderen in der Landwirtschaft verwendeten Partikeln, bei dem die zu zählenden Partikel auf eine Prallplatte geleitet werden, die dadurch in Schwingung versetzt wird, wobei dann von der Schwingung abhängige, elektrische Signale erzeugt werden, durch deren Auswertung die Partikelanzahl ermittelt wird, dadurch gekennzeichnet, daß zunächst mindestens eine für den Aufprall eines Partikels charakteristische Elongation ermittelt und festgehalten wird und daß dann beim Aufprall von Partikeln eine vergleichbare, in gleicher zeitlicher Relation auftretende, aktuelle Elongation ermittelt wird, die jeweils mit der charakertischen Elongation verglichen wird, daß dann, wenn diese Elongation kleiner als die charakteristische Elongation ist, ein Partikel gezählt wird, und wenn diese Elongation größer als die charakteristische Elongation ist, auf den Aufprall eines weiteren Partikels geschlossen wird.

2. Verfahren nach Anspruch 1, dadurch gekennzeichnet, daß eine Vielzahl von für den Aufprall eines Partikels charakteristische Elongationen, die für eine bei dem Aufprall eines Körpers entstehende Abklingkurve typisch sind, erfaßt und festgehalten werden, und daß eine Vielzahl von beim Aufprall tatsächlich erhaltenen Elongationen, die eine Eingangssignalkurve bilden, erfaßt und mit der charakteristischen Abklingkurve verglichen werden.

3. Verfahren nach Anspruch 1 oder 2, dadurch gekennzeichnet, daß aus dem Aufprall einer Reihe von Partikeln eine durchschnittliche Schwingungsdauer der Prallplatte ermittelt wird und daß das erhaltene Zählergebnis in Abhängigkeit von dieser Schwingungsdauer korrigiert wird.

4. Verfahren nach Anspruch 3, dadurch gekennzeichnet, daß das statistische Maß der Streuung um die durchschnittliche Schwingungsdauer der Prallplatte ermittelt wird und daß die Korrektur abhängig von diesem Streumaß vorgenommen wird.

5. Verfahren nach mindestens einem der vorangegangenen Ansprüche, dadurch gekennzeichnet, daß die prozentuale Übereinstimmung der erfaßten Eingangssignalform mit einer festgehaltenen, für ein spezielles Partikel typischen Signalform festgestellt wird.

6. Verfahren nach mindestens einem der vorangegangenen Ansprüche, dadurch gekennzeichnet, daß das durch die auftreffenden Partikel entstandene Signal auf typische Frequenzanteile hin untersucht wird und daß dann bestimmte Teilfrequenzegrößen zur Unterscheidung der Partikelsignale herangezogen werden.

7. Vorrichtung zur Durchführung des Verfahrens nach Anspruch 1, mit einer Prallplatte, auf die die zu zählenden Partikel auftreffen und mit einem Schallwandler (2) zur Umsetzung der Schwingungen der Prallplatte in elektrische Signale und mit einer Auswerteeinrichtung (20) zur Auswertung der elektrischen Signale dadurch gekennzeichnet, daß die Auswerteeinrichtung (20) eine Erfassungsschaltung (22) aufweist, in der die vom Schallwandler (2) erhaltenen Signale mit dem Zeitpunkt des Auftretens versehbar sind, und daß die Auswerteeinrichtung einen Datenpuffer aufweist (24), in dem die mit dem Zeitpunkt versehenen Signale ablegbar sind und daß die Auswerteeinrichtung (20) eine Auswerteschaltung (26) aufweist, in der die gepufferten, aktuellen Signalwerte mit gespeicherten, charakeristischen Signalwerten vergleichbar sind.

8. Vorrichtung nach Anspruch 7, dadurch gekennzeichnet, daß der Schallwandler ein piezoelektrisches Element (2) ist.

9. Vorrichtung nach Anspruch 8, dadurch gekennzeichnet, daß zwei im Abstand zueinander angeordnete, parallele Prallplatteten vorgesehen sind, an deren zugekeherten Seiten jeweils ein piezoelektrisches Element angeordnet ist.

10. Vorrichtung nach mindestens einem der Ansprüche 8 und 9, dadurch gekenneichnet, daß zwischen der Auswerteeinrichtung (20) und dem piezoelektrischen Element (2) ein Verstärker (4) und ein Gleichrichter (6) zwischengeschaltet sind.

11. Vorrichtung nach mindestens einem der Ansprüche 7 bis 10, dadurch gekennzeichnet, daß ein Analog-Digital-Wandler (10) vorgesehen ist, eine digitale Verarbeitung der Signale in der Auswerteeinrichtung (20) zu ermöglichen.

12. Vorrichtung nach mindestens einem der Ansprüche 7 bis 10, dadurch gekennzeichnet, daß das an der Auswerteschaltung (26) erhaltene Signal einer Zähleinheit (30) zugeführbar ist, an die auch eine Korrektureinheit (26a) angeschlossen ist.

13. Vorrichtung nach Anspruch 11, dadurch gekennzeichnet, daß die Zähleinheit (30) mit einer Zeitschaltung (28) verbunden ist und daß die Ausgangssignale als Partikelzahl pro Zeiteinheit auslesbar sind.

**Revendications**

1. Procédé de comptage de grains de semence, de grains d'engrais ou autres particules utilisés dans l'agriculture, procédé selon lequel les particules à compter sont dirigées sur une plaque de rebondissement qui est ainsi mise en oscillation et crée des signaux électriques dépendants des oscillations, signaux électriques dont l'exploitation permet de fournir un nombre de particules, procédé caractérisé en ce que l'on détermine tout d'abord une élongation caractéristique au rebondissement d'une particule et on inscrit cette élongation en mémoire et en ce que lors du rebondissement d'une particule, on détermine une élongation réelle comparable se présentant dans des intervalles de temps analogues, cette élongation étant comparée à l'élongation caractéristique de façon que lorsque cette élongation est inférieure à l'élongation caractéristique, on compte une particule et que lorsque cette élongaton est supérieure à l'élongation caractéristique, on conclut au rebondissement d'une autre particule.

2. Procédé selon la revendication 1, caractérisé en ce qu'un grand nombre d'élongations caractéristiques du rebondissement de particules et qui sont typiques de la courbe d'atténuation engendrée par le rebondissement d'un corps sont détectées et inscrites en mémoire et en ce que l'on compare un grand nombre d'élongations obtenues réellement lors du rebondissement et qui forment une courbe de signal d'entrée pour comparer ces signaux à la courbe d'atténuation caractéristique.

3. Procédé selon la revendication 1 ou 2, caractérisé en ce qu'à partir du rebondissement d'une série de particules, on détermine une durée d'oscillation moyenne de la plaque de rebondissement et le résultat de comptage obtenu est corrigé en fonction de cette durée d'oscillation.

4. Procédé selon la revendication 3, caractérisé en ce qu'on effectue la mesure statistique de la dispersion autour de la durée d'oscillation moyenne de la plaque de rebondissement et on fait la correction en fonction de cette mesure de dispersion.

5. Procédé selon au moins l'une des revendications précédentes, caractérisé en ce que l'on détermine le pourcentage de correspondance entre la forme du signal d'entrée, détectée et une forme de signal caractéristique enregistrée, correspondant à une particule déterminée.

6. Procédé selon au moins l'une des revendications précédentes, caractérisé en ce que le signal engendré par l'arrivée d'une particule est examiné quant aux composantes caractéristiques de fréquence et on utilise certaines harmoniques pour séparer les signaux des particules.

7. Dispositif pour la mise en oeuvre du procédé selon la revendication 1, comportant une plaque de rebondissement sur laquelle arrivent les particules à compter ainsi qu'un convertisseur phonique (2) pour convertir les oscillations de la plaque de rebondissement des signaux électriques et un circuit d'exploitation (20) pour exploiter les signaux électriques, dispositif caractérisé en ce que le dispositif d'exploitation (20) comporte un circuit de saisie (22) dans lequel on associe aux signaux fournis par le convertisseur phonique (2), l'instant de l'arrivée de ces signaux et en ce que le circuit d'exploitation comporte un tampon de données (24) dans lequel sont inscrits les signaux munis de leur temps et l'installation d'exploitation (20) comporte un circuit d'exploitation (26) dans lequel on compare les valeurs réelles des signaux mis en mémoire et des valeurs caractéristiques des signaux mis en mémoire.

8. Dispositif selon la revendication 7, caractérisé en ce que le convertisseur phonique est un élément piézo-électrique (2).

9. Dispositif selon la revendication 8, caractérisé par deux plaques de rebondissement, parallèles, distantes l'une de l'autre et dont les faces en regard comportent respectivement un élément piézo-électrique.

10. Dispositif selon au moins l'une des revendications 8 et 9, caractérisé en ce qu'entre l'installation d'exploitation (20) et l'élément piézoélectrique (2), il est prévu un amplificateur (4) et un redresseur (6).

11. Dispositif selon au moins l'une des revendications 7 à 10, caractérisé par un convertisseur analogique/numérique (10), pour permettre un traitement numérique des signaux dans l'installation d'exploitation (20).

12. Dispositif selon au moins l'une des revendication 7 à 10, caractérisé en ce que le signal fourni par le circuit d'exploitation (26) est appliqué à une unité de comptage (30) à laquelle est reliée une unité de correction (26a).

13. Dispositif selon la revendication 11, caractérisé en ce que l'unité de comptage (30) est reliée à un circuit de temporisation (28) et en ce que les signaux de sortie sont fournis comme nombres de particules par unité de temps.

**Claims**

1. A method of counting grains of seed material, fertilizers and other particles used in agriculture, in which the particles to be counted are passed to a baffle plate, which is thereby caused to oscillate, electrical signals then being produced which are dependent on the oscillation, and by means of whose evaluation the number of particles is determined, characterised in that initially at least one elongation which is characteristic for. the impingement of a particle, is determined and inputted, and that a comparable, actual elongation is then determined which occurs in the same ratio with respect to time, and which in each case is compared with the characteristic elongation, in that, when this elongation is smaller than the characteristic elongation, one particle is counted, and when this elongation is greater than the characteristic elongation, the impingement of an additional particle is assumed.

2. A method according to Claim 1, characterised in that a plurality of elongations characteristic of the impingement of a particle and typical for a damping curve are detected and inputted, and that a plurality of elongations actually obtained during impingement, and which form an input signal curve, are detected and compared with the characteristic damping curve.

3. A method according to Claim 1 or 2, characterised in that an average oscillation period of the baffle plate is determined from the impingement of a series of particles, and that the counter result obtained is corrected in dependence on this oscillation period.

4. A method according to Claim 3, characterised in that the statistical scatter dimension is determined during the average oscillation period of the baffle plate, and that correction is undertaken in dependence on this scatter dimension.

5. A method according to at least one of the foregoing Claims, characterised in that the percentage conformity is ascertained of the detected signal input form with an inputted signal form, which is typical for one specific particle.

6. A method according to at least one of the foregoing Claims, characterised in that the signal arising from the impinging particles is examined for typical frequency components, and that specific partial frequency data are then used to distinguish the particle signals.

7. A device for carrying out the method according to Claim 1, with a baffle plate upon which the particles to be counted impinge, with a sonic transducer (2) for converting the oscillations of the baffle plate into electrical signals, and with an evaluation device (20) for evaluating the electrical signals, characterised in that the evaluation device (20) comprises a detection circuit (22) in which the signals received from the sonic transducer (2) are provided with the time of occurrence, and that the evaluation device has a data buffer (24) in which the signals provided with the time may be deposited, and that the evaluation device (20) has an evaluation circuit (26) in which the buffered, actual signal values may be compared with stored, characteristic signal values.

8. A device according to Claim 7, characterised in that the sonic transducer is a piezoelectric element (2).

9. A device according to Claim 8, characterised in that two parallel baffle plates are provided, which are spaced apart from each other, and on each of whose facing sides a piezoelectric element is located.

10. A device according to at least one of Claims 8 and 9, characterised in that an amplifier (4) and a rectifier (6) are interposed between the evaluation device (20) and the piezoelectric element (2).

11. A device according to at least one of Claims 7 to 10, characterised in that an analog-to-digital converter (10) is provided in order to enable digital processing of the signals in the evaluation device (20).

12. A device according to at least one of Claims 7 to 10, characterised in that the signal obtained at the evaluation circuit (26) may be passed to a counter unit (30), to which a correction unit (26a) is also connected.

13. A device according to Claim 11, characterised in that the counter unit (30) is connected to a timing circuit (28), and that the output signals may be read off as the number of particles per unit of time.

# Fig.1

Fig.2